# EUROPEAN PATENT SPECIFICATION

(11) **EP 4 491 074 B1**
(45) Date of publication and mention of the grant of the patent: **07.10.2026**
(21) Application number: 23844353.5
(22) Date of filing: 10.08.2023
(51) Int. Cl.: A47J 37/06, F24C 7/02, F24C 7/08, H05B 6/68

(54) **COOKING DEVICE AND CONTROL METHOD AND APPARATUS THEREFOR, AND COMPUTER READABLE STORAGE MEDIUM**
KOCHVORRICHTUNG UND STEUERUNGSVERFAHREN UND -VORRICHTUNG DAFÜR SOWIE COMPUTERLESBARES SPEICHERMEDIUM
DISPOSITIF DE CUISSON ET PROCÉDÉ ET APPAREIL DE COMMANDE ASSOCIÉS, ET SUPPORT DE STOCKAGE LISIBLE PAR ORDINATEUR

(30) Priority: 31.05.2023 CN 202310644853; 31.05.2023 CN 202310644799; 31.05.2023 CN 202310644823
(43) Date of publication of application: 15.01.2025
(73) Proprietor: Guangdong Midea Kitchen Appliances Manufacturing Co., Ltd., Foshan, Guangdong 528311 (CN)
(72) Inventor: LIU, Tianyi, Foshan, Guangdong 528311 (CN); ZHANG, Zhi, Foshan, Guangdong 528311 (CN); ZHANG, Peiyao, Foshan, Guangdong 528311 (CN); CHEN, Xiaojiang, Foshan, Guangdong 528311 (CN); LU, Xu, Foshan, Guangdong 528311 (CN); YUAN, Shuangxia, Foshan, Guangdong 528311 (CN); ZHANG, Xiaohua, Foshan, Guangdong 528311 (CN)
(74) Representative: RGTH
(86) International application number: PCT/CN2023/112293
(87) International publication number: WO 2024/244165

(56) References cited:
- CN-A- 110 897 514
- CN-A- 111 603 055
- CN-A- 113 028 463
- CN-A- 113 558 494
- CN-A- 114 060 870
- CN-A- 114 060 871
- CN-A- 115 607 014
- CN-A- 116 088 601
- CN-A- 116 439 590
- KR-A- 20180 001 548
- US-A1- 2023 038 969

## Description

### FIELD

The present disclosure relates to the field of cooking control technologies, and more particularly, to a cooking device, a control method and apparatus thereof, and a computer-readable storage medium.

### BACKGROUND

Frying is a traditional and fast food processing method widely used in home and commercial cooking. Fried food is popular for its appealing appearance and its crispy exterior and tender interior texture. However, the fried food also has a high content of fat and prone to produce harmful substances during cooking.

Air frying is a new cooking method that uses hot air instead of oil as a heat transfer medium. In a frying process, no use or less use of oil not only greatly reduces an oil content of food, but also retains nutrients. However, because air has a heat transfer coefficient smaller than a heat transfer coefficient of the oil, changes in a temperature, moisture, and a color of food in an air frying process are obviously slower than changes in the frying process, resulting in a lower moisture loss inside the food, leading to an overall soft crust of food, a poor encrustation effect, and a long cooking time period.
CN 116 088 601 A discloses a control method and a cooking utensil. The control method is used for the cooking utensil. The cooking utensil comprises a cavity, a heating module, a hot air module, a microwave module and a steam module. In the first heating stage, the microwave module and the steam module are controlled to work alternately, so that the temperature of the cavity is adjusted to a first preset temperature range; in the second temperature rising stage, the heating module and the hot air module are controlled to work alternately so that the temperature of the cavity can be adjusted to a second preset temperature range; in the maintaining stage, the hot air module and the heating module are controlled to work alternately so as to control the temperature of the cavity to be maintained within a third preset temperature range. According to the control method, microwave, steam, hot air and heating functions are combined, and the cooking time can be effectively shortened while the effect that the air fried food is crisp outside and tender inside is guaranteed.
US 2023/038969 A discloses a cooking apparatus has a cooking chamber, a microwave unit to radiate microwaves to the cooking chamber, a convection unit to supply hot air to the cooking chamber, a grill unit to supply radiant heat to the cooking chamber, an input unit to receive a cooking command and a control unit to perform a cooking corresponding to the received cooking command by performing one of a first heating stage and a second heating stage, and after performing the one of the first heating stage and the second heating stage, performing the other one of the first heating stage and the second heating stage. In the first heating stage, the control unit operates the microwave unit and at least one of the convection unit and the grill unit, and in the second heating stage, the control unit operates the grill unit and the convection unit while not operating the microwave unit.

### SUMMARY

The present invention aims to solve, at least one of the technical problems in the related art to some extent. To this end, one object of the present invention is to provide a control method for a cooking device according to claim 1, capable of enhancing a dehydration rate of a food material, further accelerating cooking of the food material, and shortening a cooking time period, to achieve a cooking effect of the food material with a crispy exterior and tender interior, and thus to improve user experience.

A second object of the present invention is to provide a computer-readable storage medium according to claim 11.

A third object of the present invention is to provide a cooking device according to claim 12.

A fourth object of the present invention is to provide a control apparatus for a cooking device according to claim 13.

In order to achieve the above-mentioned objects, embodiments of a first aspect of the present invention provide a control method for a cooking device. The cooking device comprises an air frying module and a microwave module. The method comprises: obtaining a characteristic parameter of a food material and a cooking stage of the cooking device; determining a cooking parameter of the cooking device based on the characteristic parameter of the food material; and controlling the air frying module or the microwave module based on the cooking stage and the cooking parameter to accelerate cooking of the food material.

In the control method for the cooking device according to the embodiments of the present invention, by controlling the air frying module or the microwave module based on the cooking stage and the cooking parameter, the dehydration rate of the food material can be enhanced, cooking of the food material is further accelerated, and the cooking time period is shortened, to achieve the cooking effect of the food material with the crispy exterior and tender interior, and thus to improve the user experience.

In addition, the control method for the cooking device according to the above-mentioned embodiments of the present invention may further comprise additional technical features as follows.

According the invention, the characteristic parameter of the food material comprises a type and a weight of the food material; the cooking parameter comprises predetermined cooking power, a predetermined cooking temperature, a total cooking time period, and a cavity temperature of the cooking device; and the cooking stage comprises a microwave quick-heating stage, an air-frying temperature rise stage, and a browning and crusting stage.

According to the invention, the controlling the air frying module or the microwave module based on the cooking stage and the cooking parameter comprises, when the cooking stage is the microwave quick-heating stage: determining a first predetermined cooking time period at the microwave quick-heating stage, and determining first predetermined cooking power at the microwave quick-heating stage based on the type of the food material; and controlling the microwave module to operate at the first predetermined cooking power for the first predetermined cooking time period.

According to an embodiment of the present invention, the first predetermined cooking power ranges from 200 W to 1400 W; and the first predetermined cooking time period ranges from 15%t to 35%t, where t represents the total cooking time period.

According to an embodiment of the present invention, the controlling the air frying module or the microwave module based on the cooking stage and the cooking parameter comprises, when the cooking stage is the air-frying temperature rise stage: determining a first predetermined cooking temperature and a second predetermined cooking time period at the air-frying temperature rise stage; obtaining a cavity temperature of the cooking device; and controlling the air frying module based on the cavity temperature, the first predetermined cooking temperature and the second predetermined cooking time period.

According to an embodiment of the present invention, the controlling the air frying module based on the cavity temperature, the first predetermined cooking temperature and the second predetermined cooking time period comprises, in the second predetermined cooking time period: controlling the air frying module to operate when the cavity temperature is smaller than or equal to a difference between the first predetermined cooking temperature and a first temperature threshold; and prohibiting the air frying module from operating when the cavity temperature is greater than or equal to a sum of the first predetermined cooking temperature and the first temperature threshold.

According to an embodiment of the present invention, the first predetermined cooking temperature ranges from 160°C to 260°C; and the second predetermined cooking time period ranges from 40%t to 65%t, where t represents the total cooking time period.

According to an embodiment of the present invention, the method further comprises, subsequent to completion of the controlling the air frying module based on the cavity temperature, the first predetermined cooking temperature and the second predetermined cooking time period: switching the cooking stage to the browning and crusting stage.

According to an embodiment of the present invention, the controlling the air frying module or the microwave module based on the cooking stage and the cooking parameter comprises, when the cooking stage is the browning and crusting stage: determining a second predetermined cooking temperature and a third predetermined cooking time period at the browning and crusting stage; obtaining a cavity temperature of the cooking device; and controlling the air frying module based on the cavity temperature, the second predetermined cooking temperature and the third predetermined cooking time period.

According to an embodiment of the present invention, the controlling the air frying module based on the cavity temperature, the second predetermined cooking temperature and the third predetermined cooking time period comprises, in the third predetermined cooking time period: controlling the air frying module to operate when the cavity temperature is smaller than or equal to a difference between the second predetermined cooking temperature and a second temperature threshold; and prohibiting the air frying module from operating when the cavity temperature is greater than or equal to a sum of the second predetermined cooking temperature and the second temperature threshold.

According to an embodiment of the present invention, the second predetermined cooking temperature ranges from 140°C to 250°C; and the third predetermined cooking time period ranges from 15%t to 40%t, where t represents the total cooking time period.

According to an embodiment of the present invention, the method further comprises, subsequent to completion of the controlling the air frying module based on the cavity temperature, the second predetermined cooking temperature and the third predetermined cooking time period: switching the cooking stage to the microwave quick-heating stage.

According to an embodiment of the present invention, the cooking stage further comprises a cavity temperature rise stage; and the controlling the air frying module or the microwave module based on the cooking stage and the cooking parameter comprises, when the cooking stage is the cavity temperature rise stage: determining a third predetermined cooking temperature and a fourth predetermined cooking time period at the cavity temperature rise stage; obtaining a cavity temperature of the cooking device; and controlling the air frying module based on the cavity temperature, the third predetermined cooking temperature and the fourth predetermined cooking time period.

According to an embodiment of the present invention, the controlling the air frying module based on the cavity temperature, the third predetermined cooking temperature and the fourth predetermined cooking time period comprises, in the fourth predetermined cooking time period: controlling the air frying module to operate when the cavity temperature is smaller than or equal to a difference between the third predetermined cooking temperature and a third temperature threshold; and prohibiting the air frying module from operating when the cavity temperature is greater than or equal to a sum of the third predetermined cooking temperature and the third temperature threshold.

According to an embodiment of the present invention, the third predetermined cooking temperature ranges from 80°C to 250°C; and the fourth predetermined cooking time period ranges from 20%t to 35%t, where t represents the total cooking time period.

According to an embodiment of the present invention, a cooking time period in the air-frying temperature rise stage ranges from 20%t to 30%t, where t represents the total cooking time period.

According to an embodiment of the present invention, the total cooking time period is determined based on the weight of the food material and ranges from 8min to 40min.

In order to achieve the above-mentioned objects, embodiments of a second aspect of the present invention provide a computer-readable storage medium. The computer-readable storage medium has a control program for a cooking device stored thereon. The control program for the cooking device, when executed by a processor, implements the above-mentioned control method for the cooking device.

The computer-readable storage medium according to the embodiments of the present invention can enhance the dehydration rate of the food material, further accelerate cooking of the food material, and shorten the cooking time period, to achieve the cooking effect of the food material with the crispy exterior and tender interior, and thus to improve the user experience.

In order to achieve the above-mentioned objects, embodiments of a third aspect of the present invention provide a cooking device. The cooking device comprises: a memory; a processor; and a control program for a cooking device stored on the memory and executable on the processor. The processor, when executing the control program, implements the above-mentioned control method for the cooking device.

The cooking device according to the embodiments of the present invention can enhance the dehydration rate of the food material, further accelerate cooking of the food material, and shorten the cooking time period, to achieve the cooking effect of the food material with the crispy exterior and tender interior, and thus to improve the user experience.

In order to achieve the above-mentioned objects, embodiments of a fourth aspect of the present invention provide a control apparatus for a cooking device. The cooking device comprises an air frying module and a microwave module. The device comprises an obtaining module, a determining module, and a control module. The obtaining module is configured to obtain a characteristic parameter of a food material and a cooking stage of the cooking device. The determining module is configured to determine a cooking parameter of the cooking device based on the characteristic parameter of the food material. The control module is configured to control the air frying module or the microwave module based on the cooking stage and the cooking parameter to accelerate cooking of the food material.

The control apparatus according to the embodiments of the present invention can enhance the dehydration rate of the food material, further accelerate cooking of the food material, and shorten the cooking time period, to achieve the cooking effect of the food material with the crispy exterior and tender interior, and thus to improve the user experience.

Additional aspects and advantages of the embodiments of present invention will be provided at least in part in the following description, or will become apparent in part from the following description, or will be learned from the practice of the embodiments of the present invention.

### BRIEF DESCRIPTION OF THE DRAWINGS

FIG. 1 is a block diagram of a cooking device according to an embodiment of the present invention.
FIG. 2 is a flowchart of a control method for a cooking device according to an embodiment of the present invention.
FIG. 3 is a flowchart of a control method for a cooking device according to another embodiment of the present invention.
FIG. 4 is a flowchart of a control method for a cooking device according to another embodiment of the present invention.
FIG. 5 is a flowchart of a control method for a cooking device according to another embodiment of the present invention.
FIG. 6 is a flowchart of a control method for a cooking device according to another embodiment of the present invention.
FIG. 7 is a block diagram of a cooking device according to another embodiment of the present invention.
FIG. 8 is a flowchart of a control apparatus for a cooking device according to an embodiment of the present invention.

### DETAILED DESCRIPTION OF THE EMBODIMENTS

The embodiments of the present invention will be described in detail below with reference to examples thereof as illustrated in the accompanying drawings, throughout which same or similar elements, or elements having same or similar functions, are denoted by same or similar reference numerals. The embodiments described below with reference to the drawings are illustrative only, and are intended to explain rather than limit the present disclosure.

A control method for a cooking device, a computer-readable storage medium, a cooking device, and a control apparatus for a cooking device according to embodiments of the present invention are described below with reference to the accompanying drawings.

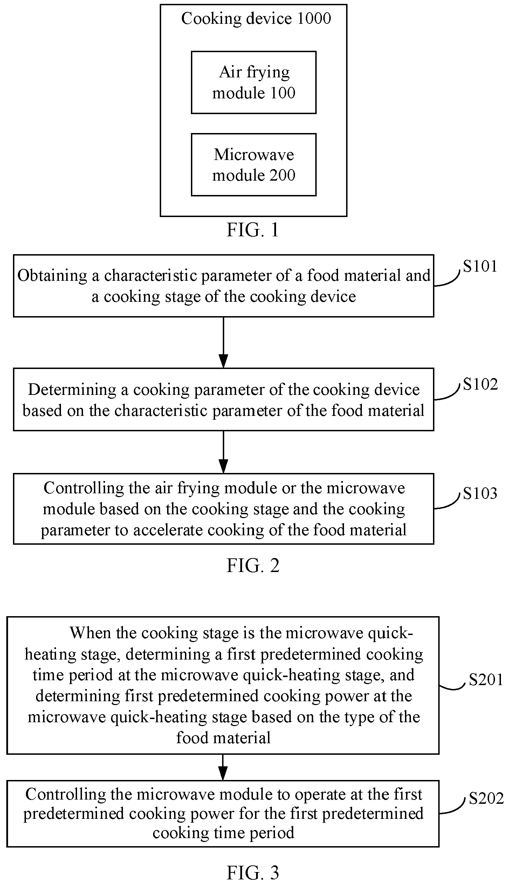

In an exemplary embodiment of the present invention, as illustrated in FIG. 1, a cooking device 1000 comprises an air fry module 100 and a microwave module 200. Both the air fry module 100 and the microwave module 200 are capable of cooking a food material. The present disclosure cooks the food material by controlling cooperative operation between the air fry module 100 and the microwave module 200, to shorten a cooking time period while improving a cooking effect.

FIG. 2 is a flowchart of a control method for a cooking device according to an embodiment of the present invention.

According to the invention, as illustrated in FIG. 2, the control method for the cooking device comprises following actions at steps S101 to S103.

At step S101, a characteristic parameter of a food material and a cooking stage of the cooking device are obtained.

In this embodiment, the characteristic parameter of the food material comprises a type and a weight of the food material. The type and the weight of the food material may be obtained by providing an intelligent sensor, or may be obtained manually by a user. For example, the type of the food material may be French fries, a chicken wing, a whole chicken, and a pork burger, etc. In addition, the present disclosure may not specifically limit the characteristic parameter of the food material and a manner of obtaining the characteristic parameter of the food material. The cooking stage comprises a microwave quick-heating stage, an air-frying temperature rise stage, and a browning and crusting stage. The cooking stage of the cooking device for obtaining in this embodiment may be one of the microwave quick-heating stage, the air-frying temperature rise stage, and the browning and crusting stage.

In this embodiment, the characteristic parameter of the food material may also be changed to a specific menu based on a functional requirement of the cooking device, such as a whole pork chop, a lamb chop, and a Wellington steak, etc. Then, a to-be-cooked menu obtained by the user may be determined as the characteristic parameter of the food material, or a to-be-cooked menu obtained by the intelligent sensor may be determined as the characteristic parameter of the food material.

At step S102, a cooking parameter of the cooking device is obtained based on the characteristic parameter of the food material.

In this embodiment, the characteristic parameter of the food material comprises a type and a weight of the food material, and the cooking parameter comprises predetermined cooking power, a predetermined cooking temperature, a total cooking time period, and a cavity temperature of the cooking device. Then, the predetermined cooking power, the predetermined cooking temperature, the total cooking time period, and the cavity temperature of the cooking device may be determined based on the type and the weight of the food material.

It should be noted that the total cooking time period t is determined based on the weight of the food material, and ranges from 8min to 40min. Furthermore, the present disclosure may not specifically limit a value range of the total cooking time period.

At step S103, the air frying module or the microwave module is controlled based on the cooking stage and the cooking parameter to accelerate cooking of the food material.

According to the invention, the air frying module or the microwave module is controlled based on the microwave quick-heating stage, the air-frying temperature rise stage, and the browning and crusting stage in the cooking stage, and the predetermined cooking power, the predetermined cooking temperature, the total cooking time period, and the cavity temperature of the cooking device in the cooking parameter, to accelerate cooking of the food material. The microwave module is controlled when the cooking stage is the microwave quick-heating stage, the air frying module is controlled when the cooking stage is the air-frying temperature rise stage, and the air frying module is controlled when the cooking stage is the browning and crusting stage.

Further, according to the invention, as illustrated in FIG. 3, the controlling the air frying module or the microwave module based on the cooking stage and the cooking parameter comprises following actions at steps S201 and S202.

At step S201, when the cooking stage is the microwave quick-heating stage, a first predetermined cooking time period at the microwave quick-heating stage is determined, and first predetermined cooking power at the microwave quick-heating stage is determined based on the type of the food material.

In this embodiment, when the cooking stage is the microwave quick-heating stage, a first predetermined cooking time period t_1 may be determined based on the weight of the food material and ranges from 15%t to 35%t, where t represents a total cooking time period. First predetermined cooking power P_1 at the microwave quick-heating stage is determined based on the type of food material and ranges from 200W to 1400W. In addition, the present disclosure may not specifically limit specific values of the first predetermined cooking power P_1 and the first predetermined cooking time period t_1.

At step S202, the microwave module is controlled to operate at the first predetermined cooking power for the first predetermined cooking time period.

In this embodiment, if the type of the food material is French fries, the weight of the food material is 454g, the total cooking time period t may preferably be 28min, and then the first predetermined cooking time period t_1 ranging from 4.2min to 9.8min may be obtained. The first predetermined cooking time period t_1 may preferably be 6min, the first predetermined cooking power P_1 may preferably be 1000W. Furthermore, the present disclosure may not specifically limit a value of the first predetermined cooking power P_1 within a value range. The microwave module is then controlled to operate at the first predetermined cooking power P_1 for the first predetermined cooking time period t_1 by means of the selected first predetermined cooking time period t_1 and the first predetermined cooking power P_1. Water molecules in the food material can be heated by controlling the microwave module at the microwave quick-heating stage. Therefore, a temperature of a center of the food material increases rapidly, and moisture in the center of the food material rapidly migrates towards a surface of the food material and is further vaporized.

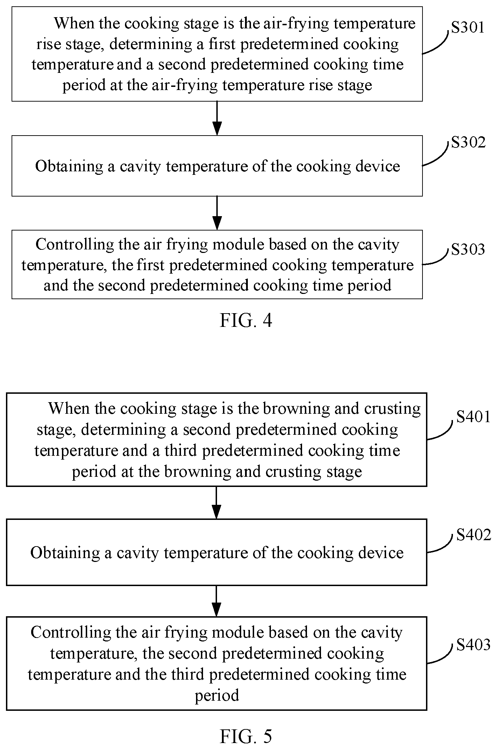

Further, in some embodiments of the present invention, as illustrated in FIG. 4, the controlling the air frying module or the microwave module based on the cooking stage and the cooking parameter comprises following actions at steps S301 to S303.

At step S301, when the cooking stage is the air-frying temperature rise stage, a first predetermined cooking temperature and a second predetermined cooking time period at the air-frying temperature rise stage are determined.

In this embodiment, when the cooking stage is the air-frying temperature rise stage, a first predetermined cooking temperature T_1 at the air-frying temperature rise stage may be determined based on the type and the weight of the food material and ranges from 160°C to 260°C. A second predetermined cooking time period t_2 is determined based on the weight of the food material and ranges from 40%t to 65%t, where t represents the total cooking time period.

At step S302, a cavity temperature of the cooking device is obtained.

In this embodiment, a cavity temperature T of the cooking device is a real-time temperature inside a cavity of the cooking device. In addition, a temperature sensor may be provided inside the cavity of the cooking device to obtain the cavity temperature T of the cooking device. Furthermore, the present disclosure may not specifically limit a manner of obtaining the cavity temperature T of the cooking device.

At step S303, the air frying module is controlled based on the cavity temperature, the first predetermined cooking temperature and the second predetermined cooking time period.

In this embodiment, in the second predetermined cooking time period t_2, the air frying module is controlled to operate when the cavity temperature T is smaller than or equal to a difference between the first predetermined cooking temperature T_1 and a first temperature threshold; and the air frying module is prohibited to operate when the cavity temperature T is greater than or equal to a sum of the first predetermined cooking temperature T_1 and the first temperature threshold. In addition, the air frying module is controlled to operate when the cavity temperature T is greater than the difference between the first predetermined cooking temperature T_1 and the first temperature threshold, and the cavity temperature T is smaller than the sum of the first predetermined cooking temperature T_1 and the first temperature threshold. The first temperature threshold may preferably be 5°C. Furthermore, the present disclosure may not specifically limit a value of the first temperature threshold. A second predetermined cooking temperature T_2 may preferably range from 160°C to 260°C, and the second predetermined cooking time period t_2 may range from 40%t to 65%t, where t represents the total cooking time period. Moreover, the present disclosure may not specifically limit a value range of the first predetermined cooking temperature T_1 and a value range of the second predetermined cooking time period t_2.

In this embodiment, if the type of the food material is French fries and the weight of the food material is 454g, the total cooking time period t may preferably be 28min, and then the second predetermined cooking time period t_2 ranging from 11.2min to18.2min may be obtained. The second predetermined cooking time period t_2 may preferably be 16min, the first predetermined cooking temperature T_1 may preferably be 210°C, and the first temperature threshold may preferably be 5°C. The cavity temperature T may be obtained in real time by the temperature sensor disposed in the cavity of the cooking device. When the obtained cavity temperature T is 200°C, it means that the cavity temperature T is smaller than or equal to the difference between the first predetermined cooking temperature T_1 and the first temperature threshold. Then, the air frying module is controlled to operate by means of the selected first predetermined cooking temperature T_1 and the second predetermined cooking time period t_2. When the obtained cavity temperature T is 220°C, it means that the cavity temperature T is greater than or equal to the sum of the first predetermined cooking temperature T_1 and the first temperature threshold. Then, the air frying module is prohibited from operating at the obtained cavity temperature T. When the obtained cavity temperature T is 209°C, it means that the cavity temperature T is greater than the difference between the first predetermined cooking temperature T_1 and the first temperature threshold, and the cavity temperature T is smaller than the sum of the first predetermined cooking temperature T_1 and the first temperature threshold. Then, the air frying module is controlled to operate by means of the selected first predetermined cooking temperature T_1 and the second predetermined cooking time period t_2. The control of the air frying module at the air-frying temperature quick rise stage can rapidly raise the cavity temperature and maintain a higher temperature inside the cavity, which in turn promotes further dispersion of the moisture from the center of the food material spreading to the surface of the food material into the air and accelerates moisture loss of the food material.

In some embodiments of the present invention, after the control of the air-frying temperature rise stage is completed, the cooking stage may be further switched to the browning and crusting stage, to dehydrate the surface of the food material and improve a crusting effect on the surface of the food material. As illustrated in FIG. 5, in the browning and crusting stage, the controlling the air fry module or the microwave module based on the cooking stage and the cooking parameter comprises following actions at steps S401 to S403.

At step S401, when the cooking stage is the browning and crusting stage, a second predetermined cooking temperature and a third predetermined cooking time period at the browning and crusting stage are determined.

In this embodiment, when the cooking stage is the browning and crusting stage, a second predetermined cooking temperature T_2 of the browning and crusting stage may be determined based on the type and the weight of the food material, and the second predetermined cooking temperature T_2 ranges from 140°C to 250°C. A third predetermined cooking time period t_3 may be determined based on the weight of the food material, and the third predetermined cooking time period t_3 ranges from 15%t to 40%t, where t represents the total cooking time period.

At step S402, a cavity temperature of the cooking device is obtained.

In this embodiment, a cavity temperature T of the cooking device is a real-time temperature inside the cavity of the cooking device. In addition, a temperature sensor may be provided inside the cavity of the cooking device to obtain the cavity temperature T of the cooking device. Furthermore, the present disclosure may not specifically limit a manner of obtaining the cavity temperature T of the cooking device.

At step S403, the air frying module is controlled based on the cavity temperature, the second predetermined cooking temperature and the third predetermined cooking time period.

In this embodiment, in the third predetermined cooking time period t_3, the air frying module is controlled to operate when the cavity temperature T is smaller than or equal to a difference between the second predetermined cooking temperature T_2 and a second temperature threshold; and the air frying module is prohibited from operating when the cavity temperature T is greater than or equal to a sum of the second predetermined cooking temperature T_2 and the second temperature threshold. Further, the air frying module is controlled to operate when the cavity temperature T is greater than the difference between the second predetermined cooking temperature T_2 and the second temperature threshold, and the cavity temperature T is smaller than the sum of the second predetermined cooking temperature T_2 and the second temperature threshold. The second temperature threshold may preferably be 5°C. In addition, the present disclosure may not specifically limit a value of the second temperature threshold. The second predetermined cooking temperature T_2 ranges from 140°C to 250°C. A third predetermined cooking time period t_3 may be determined based on the weight of the food material, and the third predetermined cooking time period t_3 ranges from 15%t to 40%t, where t is the total cooking time period. Furthermore, the present disclosure may not specifically limit specific values of the second predetermined cooking temperature T_2 and the third predetermined cooking time period t_3.

In this embodiment, if the type of the food material is French fries and the weight of the food material is 454g, the total cooking time period t may preferably be 28min. Then, the third predetermined cooking time period t_3 ranging from 4.2min to 11.2min may be obtained. The third predetermined cooking time period t_3 may preferably be 6min. The second predetermined cooking temperature T_2 may preferably be 180°C. The second temperature threshold may preferably be 5°C. The cavity temperature T may be obtained in real time by the temperature sensor disposed in the cavity of the cooking device. When the obtained cavity temperature T is 170°C, it means that the cavity temperature T is smaller than or equal to the difference between the second predetermined cooking temperature T_2 and the second temperature threshold. Then, the air frying module is controlled to operate by means of the selected second predetermined cooking temperature T_2 and the third predetermined cooking time period t_3. When the obtained cavity temperature T is 190° C, it means that the cavity temperature T is greater than or equal to the sum of the second predetermined cooking temperature T_2 and the second temperature threshold. Then, the air frying module is prohibited from operating by means of the obtained cavity temperature T. When the obtained cavity temperature T is 179° C, it means that the cavity temperature T is greater than the difference between the second predetermined cooking temperature T_2 and the second temperature threshold, and the cavity temperature T is smaller than the sum of the second predetermined cooking temperature T_2 and the second temperature threshold. Then, the air frying module is controlled to operate by means of the selected second predetermined cooking temperature T_2 and the third predetermined cooking time period t_3. By controlling the air frying module at the browning and crusting stage, the higher temperature in the cavity can be maintained, and the food material can be continuously heated to promote golden browning and crusting on the surface of the food material.

In some embodiments of the present invention, after the controlling of the browning and crusting stage is completed, the cooking stage may be further switched to the microwave quick-heating stage. The specific controlling of the microwave quick-heating stage may be referred to in the description of the above-mentioned embodiments, and details thereof are not repeated herein. The controlling of air frying at the microwave quick-heating stage can maintain the higher temperature in the cavity and continuously heat the food material, which in turn promotes the dispersion of the moisture on the surface of the food material into the air while crusting on the surface of the food material.

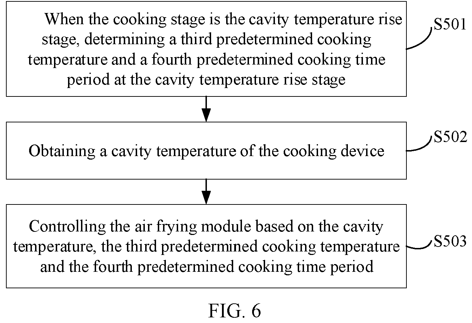

Further, in some embodiments of the present invention, the cooking stage further comprises a cavity temperature rise stage, which may be completed prior to the microwave quick-heating stage. As illustrated in FIG. 6, the controlling the air frying module or the microwave module based on the cooking stage and the cooking parameter comprises following actions at steps S501 to S503.

At step S501, when the cooking stage is the cavity temperature rise stage, a third predetermined cooking temperature and a fourth predetermined cooking time period at the cavity temperature rise stage are determined.

In this embodiment, when the cooking stage is the cavity temperature rise stage, a third predetermined cooking temperature T_3 of the cavity temperature rise stage may be determined based on the type and the weight of the food material, and the third predetermined cooking temperature T_3 ranges from 80°C to 250° C. A fourth predetermined cooking time period t_4 may be determined based on the weight of the food material, and the fourth predetermined cooking time period t_4 ranges from 20%t to 35%t, where t represents the total cooking time period.

At step S502, a cavity temperature of the cooking device is obtained.

In this embodiment, the cavity temperature T of the cooking device is a real-time temperature inside the cavity of the cooking device. In addition, a temperature sensor may be provided inside the cavity of the cooking device to obtain the cavity temperature T of the cooking device. Furthermore, the present disclosure may not specifically limit a manner of obtaining the cavity temperature T of the cooking device.

At step S503, the air frying module is controlled based on the cavity temperature, the third predetermined cooking temperature and the fourth predetermined cooking time period.

In this embodiment, in the fourth predetermined cooking time period t_4, the air frying module is controlled to operate when the cavity temperature T is smaller than or equal to a difference between the third predetermined cooking temperature T_3 and a third temperature threshold; and the air frying module is prohibited from operating when the cavity temperature T is greater than or equal to a sum of the third predetermined cooking temperature T_3 and the third temperature threshold. In addition, the air frying module is controlled to operate when the cavity temperature T is greater than the difference between the third predetermined cooking temperature T_3 and the third temperature threshold, and the cavity temperature T is smaller than the sum of the third predetermined cooking temperature T_3 and the third temperature threshold. The third temperature threshold may preferably be 5°C. Furthermore, the present disclosure may not specifically limit a value of the third temperature threshold. The third predetermined cooking temperature T_3 may preferably range from 80°C to 250°C, and the fourth predetermined cooking time period t_4 may preferably range from 20%t to 35%t, where t represents the total cooking time period. Furthermore, the present disclosure may not specifically limit a value range of the third predetermined cooking temperature T_3 and a value range of the fourth predetermined cooking time period t_4.

In this embodiment, if the type of the food material is French fries and the weight of the food material is 454g, the total cooking time period t may preferably be 28min. Then, the fourth predetermined cooking time period t_4 ranging from 5.6min to 9.8min may be obtained. The fourth predetermined cooking time period t_4 may preferably be 7min. The third predetermined cooking temperature T_3 may preferably be 150°C. The third temperature threshold may preferably be 5°C. The cavity temperature T may be obtained in real time by the temperature sensor disposed in the cavity of the cooking device. When the obtained cavity temperature T is 130°C, it means that the cavity temperature T is smaller than or equal to the difference between the third predetermined cooking temperature T_3 and the third temperature threshold. Then, the air frying module is controlled to operate by means of the third predetermined cooking temperature T_3 and the fourth predetermined cooking time period t_4. When the obtained cavity temperature T is 160°C, it means that the cavity temperature T is greater than or equal to the sum of the third predetermined cooking temperature T_3 and the third temperature threshold. Then, the air frying module is prohibited from operating by means of the obtained cavity temperature T. When the obtained cavity temperature T is 148° C, it means that the cavity temperature T is greater than the difference between the third predetermined cooking temperature T_3 and the third temperature threshold, and the cavity temperature T is smaller than the sum of the third predetermined cooking temperature T_3 and the third temperature threshold. Then, the air frying module is controlled to operate by means of the selected third predetermined cooking temperature T_3 and the fourth predetermined cooking time period t_4. By controlling the air frying module at the cavity temperature rise stage, the temperature of the cavity can be rapidly raised, an ambient temperature of the cooking can be raised, and the temperature of the surface of the food material rises accordingly.

It should be noted that if the cooking stage comprises the cavity temperature rise stage, i.e., if the cooking stage comprises the four stages, namely, the cavity temperature rise stage, the microwave quick-heating stage, the air-frying temperature rise stage, and the browning and crusting stage, a cooking time period of the air-frying temperature rise stage may be adjusted to range from 20%t to 30%t, and cooking time periods of other stages are determined in accordance with the relevant description of the above embodiments. At last, a sum of time periods of the four cooking stages is determined as the total cooking time period.

In summary, in the control method for the cooking device according to the embodiments of the present invention, by controlling the air frying module or the microwave module based on the cooking stage and the cooking parameter, the dehydration rate of the food material can be enhanced, cooking of the food material can be further accelerated, and the cooking time period can be shorten, to achieve the cooking effect of the food material with the crispy exterior and tender interior, and thus to improve the user experience.

Based on the control method for the cooking device of the above-mentioned embodiments of the present invention, embodiments of the present invention further provide a computer-readable storage medium. The computer-readable storage medium has a control program for the cooking device stored thereon. The control program for the cooking device, when executed by a processor, implements the above-mentioned control method for the cooking device of the embodiments of the present invention.

In summary, the computer-readable storage medium according to the embodiments of the present invention can enhance the dehydration rate of the food material, further accelerate cooking of the food material, and shorten the cooking time period, to achieve the cooking effect of the food material with the crispy exterior and tender interior, and thus to improve the user experience.

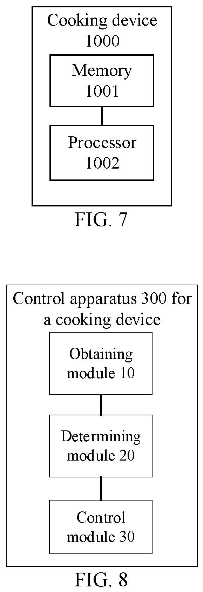

FIG. 7 is a block diagram of a cooking device according to another embodiment of the present invention.

Further, as illustrated in FIG. 7, based on the above-mentioned control method for the cooking device of the embodiments of the present invention, embodiments of the present invention further provide a cooking device 1000. The cooking device 1000 comprises a memory 1001, a processor 1002, and a control program for the cooking device stored on the memory 1001 and executable on the processor 1002. The processor, when executing the control program, implements the above-mentioned control method of the embodiments of the present invention.

In summary, the cooking device according to the embodiments of the present invention can enhance the dehydration rate of the food material, further accelerate cooking of the food material, and shorten the cooking time period, to achieve the cooking effect of the food material with the crispy exterior and tender interior, and thus to improve the user experience.

In addition, other compositions and functions of the cooking device of the embodiments of the present invention are known to those skilled in the art, and details thereof are not repeated herein to reduce redundancy.

FIG. 8 is a block diagram of a control apparatus for a cooking device according to an embodiment of the present invention.

As illustrated in FIG. 8, a control apparatus 300 for the cooking device comprises an obtaining module 10, a determining module 20, and a control module 30. The obtaining module 10 is configured to obtain a characteristic parameter of a food material and a cooking stage of the cooking device. The determining module 20 is configured to determine a cooking parameter of the cooking device based on the characteristic parameter of the food material. The control module 30 is configured to control the air frying module or the microwave module based on the cooking stage and the cooking parameter to accelerate cooking of the food material.

In some embodiments of the present invention, the characteristic parameter of the food material comprises a type and a weight of the food material; the cooking parameter comprises predetermined cooking power, a predetermined cooking temperature, a total cooking time period, and a cavity temperature of the cooking device; and the cooking stage comprises a microwave quick-heating stage, an air-frying temperature rise stage, and a browning and crusting stage.

In some embodiments of the present invention, the control module 30 is specifically configured to, when the cooking stage is the microwave quick-heating stage: determine a first predetermined cooking time period at the microwave quick-heating stage, and determine first predetermined cooking power at the microwave quick-heating stage based on the type of the food material; and control the microwave module to operate at the first predetermined cooking power for the first predetermined cooking time period.

In some embodiments of the present invention, the first predetermined cooking power ranges from 200 W to 1400 W; and the first predetermined cooking time period ranges from 15%t to 35%t, where t represents the total cooking time period.

In some embodiments of the present invention, the control module 30 is specifically configured to, when the cooking stage is the air-frying temperature rise stage: determine a first predetermined cooking temperature and a second predetermined cooking time period at the air-frying temperature rise stage; obtain a cavity temperature of the cooking device; and control the air frying module based on the cavity temperature, the first predetermined cooking temperature and the second predetermined cooking time period.

In some embodiments of the present invention, the control module 30 is specifically configured to, in the second predetermined cooking time period: control the air frying module to operate when the cavity temperature is smaller than or equal to a difference between the first predetermined cooking temperature and a first temperature threshold; and prohibit the air frying module from operating when the cavity temperature is greater than or equal to a sum of the first predetermined cooking temperature and the first temperature threshold.

In some embodiments of the present invention, the first predetermined cooking temperature ranges from 160°C to 260°C; and the second predetermined cooking time period ranges from 40%t to 65%t, where t represents the total cooking time period.

In some embodiments of the present invention, the control module 30 is specifically configured to switch the cooking stage to the browning and crusting stage, subsequent to completion of the controlling the air frying module based on the cavity temperature, the first predetermined cooking temperature and the second predetermined cooking time period.

In some embodiments of the present invention, the control module 30 is specifically configured to, when the cooking stage is the browning and crusting stage: determine a second predetermined cooking temperature and a third predetermined cooking time period at the browning and crusting stage; obtain a cavity temperature of the cooking device; and control the air frying module based on the cavity temperature, the second predetermined cooking temperature and the third predetermined cooking time period.

In some embodiments of the present invention, the control module 30 is specifically configured to, in the third predetermined cooking time period: control the air frying module to operate when the cavity temperature is smaller than or equal to a difference between the second predetermined cooking temperature and a second temperature threshold; and prohibit the air frying module from operating when the cavity temperature is greater than or equal to a sum of the second predetermined cooking temperature and the second temperature threshold.

In some embodiments of the present invention, the second predetermined cooking temperature ranges from 140°C to 250°C; and the third predetermined cooking time period ranges from 15%t to 40%t, where t represents the total cooking time period.

In some embodiments of the present invention, the control module 30 is further configured to switch the cooking stage to the microwave quick-heating stage, subsequent to completion of the controlling the air frying module based on the cavity temperature, the second predetermined cooking temperature and the third predetermined cooking time period.

In some embodiments of the present invention, the control module 30 is specifically configured to, when the cooking stage is the cavity temperature rise stage: determine a third predetermined cooking temperature and a fourth predetermined cooking time period at the cavity temperature rise stage; obtain a cavity temperature of the cooking device; and control the air frying module based on the cavity temperature, the third predetermined cooking temperature and the fourth predetermined cooking time period.

In some embodiments of the present invention, the control module 30 is specifically configured to, in the fourth predetermined cooking time period: control the air frying module to operate when the cavity temperature is smaller than or equal to a difference between the third predetermined cooking temperature and a third temperature threshold; and prohibit the air frying module from operating when the cavity temperature is greater than or equal to a sum of the third predetermined cooking temperature and the third temperature threshold.

In some embodiments of the present invention, the third predetermined cooking temperature ranges from 80°C to 250°C; and the fourth predetermined cooking time period ranges from 20%t to 35%t, where t represents the total cooking time period.

In some embodiments of the present invention, when the cooking stage comprises a cavity temperature rise stage, a cooking time period in the air-frying temperature rise stage ranges from 20%t to 30%t, where t represents the total cooking time period.

In some embodiments of the present invention, the total cooking time period is determined based on the weight of the food material and ranges from 8min to 40min.

It should be noted that other specific implementations of the control apparatus for the cooking device according to the embodiments of the present invention can be found in the specific implementations of the control method for the cooking device of the above-mentioned embodiments of the present invention, and details thereof are not repeated herein to reduce redundancy.

In summary, in the control apparatus for the cooking device according to the embodiments of the present invention, by controlling the air frying module or the microwave module based on the cooking stage and the cooking parameter, the dehydration rate of the food material can be enhanced, cooking of the food material can be further accelerated, and the cooking time period can be shorten, to achieve the cooking effect of the food material with the crispy exterior and tender interior, and thus to improve the user experience.

## Claims

1. A control method for a cooking device (1000), the cooking device (1000) comprising an air frying module (100) and a microwave module (200), the method comprising:
(S101) obtaining a characteristic parameter of a food material and a cooking stage of the cooking device (1000);
(S102) determining a cooking parameter of the cooking device (1000) based on the characteristic parameter of the food material; and
(S103) controlling the air frying module (100) or the microwave module (200) based on the cooking stage and the cooking parameter to accelerate cooking of the food material,
wherein the characteristic parameter of the food material comprises a type and a weight of the food material;
the cooking parameter comprises predetermined cooking power, a predetermined cooking temperature, a total cooking time period, and a cavity temperature of the cooking device (1000);
**characterized in that** the cooking stage comprises a microwave quick-heating stage, an air-frying temperature rise stage, and a browning and crusting stage¹, wherein the microwave module (200) is controlled when the cooking stage is the microwave quick-heating stage, the air frying (100) module is controlled when the cooking stage is the air-frying temperature rise stage, and the air frying module (100) is controlled when the cooking stage is the browning and crusting stage²,
wherein said (S103) controlling the air frying module (100) or the microwave module (200) based on the cooking stage and the cooking parameter comprises,
(S201) when the cooking stage is the microwave quick-heating stage, determining a first predetermined cooking time period at the microwave quick-heating stage, and determining first predetermined cooking power at the microwave quick-heating stage based on the type of the food material; and
(S202) controlling the microwave module (200) to operate at the first predetermined cooking power for the first predetermined cooking time period³.

2. The control method according to claim 1, wherein said (S103) controlling the air frying module (100) or the microwave module (200) based on the cooking stage and the cooking parameter comprises,
(S301) when the cooking stage is the air-frying temperature rise stage, determining a first predetermined cooking temperature and a second predetermined cooking time period at the air-frying temperature rise stage;
(S302) obtaining the cavity temperature of the cooking device (1000); and
(S303) controlling the air frying module (100) based on the cavity temperature, the first predetermined cooking temperature and the second predetermined cooking time period.

3. The control method according to claim 2, wherein said (S303) controlling the air frying module (100) based on the cavity temperature, the first predetermined cooking temperature and the second predetermined cooking time period comprises, in the second predetermined cooking time period:
controlling the air frying module (100) to operate when the cavity temperature is smaller than or equal to a difference between the first predetermined cooking temperature and a first temperature threshold; and
prohibiting the air frying module (100) from operating when the cavity temperature is greater than or equal to a sum of the first predetermined cooking temperature and the first temperature threshold; wherein preferably:
the first predetermined cooking temperature ranges from 160°C to 260°C; and
the second predetermined cooking time period ranges from 40%t to 65%t, where t represents the total cooking time period.

4. The control method according to claim 2 or 3, further comprising, subsequent to completion of said (S303) controlling the air frying module (100) based on the cavity temperature, the first predetermined cooking temperature and the second predetermined cooking time period:
switching the cooking stage to the browning and crusting stage.

5. The control method according to claim 1, wherein said (S103) controlling the air frying module (100) or the microwave module (200) based on the cooking stage and the cooking parameter comprises,
(S401) when the cooking stage is the browning and crusting stage, determining a second predetermined cooking temperature and a third predetermined cooking time period at the browning and crusting stage;
(S402) obtaining the cavity temperature of the cooking device (1000); and
(S403) controlling the air frying module (100) based on the cavity temperature, the second predetermined cooking temperature and the third predetermined cooking time period.

6. The control method according to claim 5, wherein said (S403) controlling the air frying module (100) based on the cavity temperature, the second predetermined cooking temperature and the third predetermined cooking time period comprises, in the third predetermined cooking time period:
controlling the air frying module (100) to operate when the cavity temperature is smaller than or equal to a difference between the second predetermined cooking temperature and a second temperature threshold; and
prohibiting the air frying module (100) from operating when the cavity temperature is greater than or equal to a sum of the second predetermined cooking temperature and the second temperature threshold; wherein preferably:
the second predetermined cooking temperature ranges from 140°C to 250°C; and
the third predetermined cooking time period ranges from 15%t to 40%t, where t represents the total cooking time period.

7. The control method according to claim 5 or 6, further comprising, subsequent to completion of said (S403) controlling the air frying module (100) based on the cavity temperature, the second predetermined cooking temperature and the third predetermined cooking time period:
switching the cooking stage to the microwave quick-heating stage.

8. The control method according to claim 1, wherein:
the cooking stage further comprises a cavity temperature rise stage; and
said (S103) controlling the air frying module (100) or the microwave module (200) based on the cooking stage and the cooking parameter comprises,
(S501) when the cooking stage is the cavity temperature rise stage, determining a third predetermined cooking temperature and a fourth predetermined cooking time period at the cavity temperature rise stage;
(S502) obtaining the cavity temperature of the cooking device (1000); and
(S503) controlling the air frying module (100) based on the cavity temperature, the third predetermined cooking temperature and the fourth predetermined cooking time period.

9. The control method according to claim 8, wherein said (S503) controlling the air frying module (100) based on the cavity temperature, the third predetermined cooking temperature and the fourth predetermined cooking time period comprises, in the fourth predetermined cooking time period:
controlling the air frying module (100) to operate when the cavity temperature is smaller than or equal to a difference between the third predetermined cooking temperature and a third temperature threshold; and
prohibiting the air frying module (100) from operating when the cavity temperature is greater than or equal to a sum of the third predetermined cooking temperature and the third temperature threshold; wherein preferably:
the third predetermined cooking temperature ranges from 80°C to 250°C; and
the fourth predetermined cooking time period ranges from 20%t to 35%t, where t represents the total cooking time period.

10. The control method according to claim 8 or 9, wherein a cooking time period in the air-frying temperature rise stage ranges from 20%t to 30%t, where t represents the total cooking time period.

11. A computer-readable storage medium, having a control program for a cooking device (1000) stored thereon, wherein the control program for the cooking device (1000), when executed by a processor (1002), implements a control method for the cooking device (1000) according to any one of claims 1 to 10.

12. A cooking device (1000), comprising:
a memory (1001);
a processor (1002); and
a control program for a cooking device (1000) stored on the memory (1001) and executable on the processor (1002),
wherein the processor (1002), when executing the control program, implements a control method for the cooking device (1000) according to any one of claims 1 to 10.

13. A control apparatus (300) for a cooking device (1000), the cooking device (1000) comprising an air frying module (100) and a microwave module (200), the device comprising:
an obtaining module (10) configured to obtain a characteristic parameter of a food material and a cooking stage of the cooking device (1000);
a determining module (20) configured to determine a cooking parameter of the cooking device (1000) based on the characteristic parameter of the food material; and
a control module (30) configured to control the air frying module (100) or the microwave module (200) based on the cooking stage and the cooking parameter to accelerate cooking of the food material,
**characterized in that** the cooking stage comprises a microwave quick-heating stage, an air-frying temperature rise stage, and a browning and crusting stage, wherein the microwave module (200) is controlled when the cooking stage is the microwave quick-heating stage, the air frying (100) module is controlled when the cooking stage is the air-frying temperature rise stage, and the air frying module (100) is controlled when the cooking stage is the browning and crusting stage,
wherein said control module (30) is configured for (S103) controlling the air frying module (100) or the microwave module (200) based on the cooking stage and the cooking parameter comprises,
(S201) when the cooking stage is the microwave quick-heating stage, determining a first predetermined cooking time period at the microwave quick-heating stage, and determining first predetermined cooking power at the microwave quick-heating stage based on the type of the food material; and
(S202) controlling the microwave module (200) to operate at the first predetermined cooking power for the first predetermined cooking time period.

## Patentansprüche

1. Steuerverfahren für eine Garvorrichtung (1000), wobei die Garvorrichtung (1000) ein Heißluftfrittiermodul (100) und ein Mikrowellenmodul (200) umfasst, wobei das Verfahren Folgendes umfasst:
(S101) Erhalten eines charakteristischen Parameters eines Lebensmittels und einer Garstufe der Garvorrichtung (1000);
(S102) Bestimmen eines Garparameters der Garvorrichtung (1000) auf der Grundlage des charakteristischen Parameters des Lebensmittels; und
(S103) Steuern des Heißluftfrittiermoduls (100) oder des Mikrowellenmoduls (200) auf der Grundlage der Garstufe und des Garparameters, um das Garen des Lebensmittels zu beschleunigen,
wobei der charakteristische Parameter des Lebensmittels eine Art und ein Gewicht des Lebensmittels umfasst;
der Garparameter eine vorbestimmte Garleistung, eine vorbestimmte Gartemperatur, eine Gesamtgarzeitdauer und eine Garraumtemperatur der Garvorrichtung (1000) umfasst;
**dadurch gekennzeichnet, dass** die Garstufe eine Mikrowellen-Schnellaufheizstufe, eine Heißluftfrittier-Temperaturanstiegsstufe und eine Bräunungs- und Krustenbildungsstufe umfasst, wobei das Mikrowellenmodul (200) gesteuert wird, wenn die Garstufe die Mikrowellen-Schnellaufheizstufe ist, das Heißluftfrittiermodul (100) gesteuert wird, wenn die Garstufe die Heißluftfrittier-Temperaturanstiegsstufe ist, und das Heißluftfrittiermodul (100) gesteuert wird, wenn die Garstufe die Bräunungs- und Krustenbildungsstufe ist, wobei das (S103) Steuern des Heißluftfrittiermoduls (100) oder des Mikrowellenmoduls (200) auf der Grundlage der Garstufe und des Garparameters Folgendes umfasst,
(S201) wenn die Garstufe die Mikrowellen-Schnellaufheizstufe ist, Bestimmen einer ersten vorgegebenen Garzeitdauer in der Mikrowellen-Schnellaufheizstufe und Bestimmen einer ersten vorgegebenen Garleistung in der Mikrowellen-Schnellaufheizstufe auf der Grundlage der Art des Lebensmittels; und
(S202) Steuern des Mikrowellenmoduls (200) so, dass es für den ersten vorgegebenen Garzeitraum mit der ersten vorgegebenen Garleistung arbeitet.

2. Steuerverfahren gemäß Anspruch 1, wobei das (S103) Steuern des Heißluftfrittiermoduls (100) oder des Mikrowellenmoduls (200) auf der Grundlage der Garstufe und des Garparameters Folgendes umfasst,
(S301) wenn die Garstufe die Heißluftfrittier-Temperaturanstiegsstufe ist, Bestimmen einer ersten vorgegebenen Gartemperatur und einer zweiten vorgegebenen Garzeitdauer in der Heißluftfrittier-Temperaturanstiegsstufe;
(S302) Erhalten der Garraumtemperatur der Garvorrichtung (1000); und
(S303) Steuern des Heißluftfrittiermoduls (100) auf der Grundlage der Garraumtemperatur, der ersten vorgegebenen Gartemperatur und der zweiten vorgegebenen Garzeitdauer.

3. Steuerverfahren gemäß Anspruch 2, wobei das (S303) Steuern des Heißluftfrittiermoduls (100) auf der Grundlage der Garraumtemperatur, der ersten vorgegebenen Gartemperatur und der zweiten vorgegebenen Garzeitdauer in der zweiten vorgegebenen Garzeitdauer Folgendes umfasst:
Steuern des Heißluftfrittiermoduls (100) so, dass es in Betrieb ist, wenn die Garraumtemperatur kleiner oder gleich einer Differenz zwischen der ersten vorgegebenen Gartemperatur und einem ersten Temperaturschwellenwert ist; und
Hindern des Heißluftfrittiermoduls (100) am Betrieb, wenn die Garraumtemperatur größer oder gleich einer Summe aus der ersten vorgegebenen Gartemperatur und dem ersten Temperaturschwellenwert ist;
wobei vorzugsweise:
die erste vorgegebene Gartemperatur im Bereich von 160 °C bis 260 °C liegt; und
die zweite vorgegebene Garzeitdauer zwischen 40 %t und 65 %t liegt, wobei t die Gesamtgarzeitdauer darstellt.

4. Steuerverfahren gemäß Anspruch 2 oder 3, ferner umfassend nach dem Abschluss des (S303) Steuerns des Heißluftfrittiermoduls (100) auf der Grundlage der Garraumtemperatur, der ersten vorgegebenen Gartemperatur und der zweiten vorgegebenen Garzeitdauer Folgendes:
Umschalten der Garstufe in die Bräunungs- und Krustenbildungsstufe.

5. Steuerverfahren gemäß Anspruch 1, wobei das (S103) Steuern des Heißluftfrittiermoduls (100) oder des Mikrowellenmoduls (200) auf der Grundlage der Garstufe und des Garparameters Folgendes umfasst,
(S401) wenn die Garstufe die Bräunungs- und Krustenbildungsstufe ist, Bestimmen einer zweiten vorgegebenen Gartemperatur und einer dritten vorgegebenen Garzeitdauer in der Bräunungs- und Krustenbildungsstufe;
(S402) Erhalten der Garraumtemperatur der Garvorrichtung (1000); und
(S403) Steuern des Heißluftfrittiermoduls (100) auf der Grundlage der Garraumtemperatur, der zweiten vorgegebenen Gartemperatur und der dritten vorgegebenen Garzeitdauer.

6. Steuerverfahren gemäß Anspruch 5, wobei das (S403) Steuern des Heißluftfrittiermoduls (100) auf der Grundlage der Garraumtemperatur, der zweiten vorgegebenen Gartemperatur und der dritten vorgegebenen Garzeitdauer in der dritten vorgegebenen Garzeitdauer Folgendes umfasst:
Steuern des Luftfrittiermoduls (100) so, dass es in Betrieb ist, wenn die Garraumtemperatur kleiner oder gleich einer Differenz zwischen der zweiten vorgegebenen Gartemperatur und einem zweiten Temperaturschwellenwert ist; und
Hindern des Luftfrittiermoduls (100) am Betrieb, wenn die Garraumtemperatur größer oder gleich einer Summe aus der zweiten vorgegebenen Gartemperatur und dem zweiten Temperaturschwellenwert ist; wobei vorzugsweise:
die zweite vorgegebene Gartemperatur im Bereich von 140 °C bis 250 °C liegt; und
die dritte vorgegebene Garzeitdauer zwischen 15 %t und 40 %t liegt, wobei t die Gesamtgarzeitdauer darstellt.

7. Steuerverfahren gemäß Anspruch 5 oder 6, ferner umfassend nach Abschluss des (S403) Steuerns des Heißluftfrittiermoduls (100) auf der Grundlage der Garraumtemperatur, der zweiten vorgegebenen Gartemperatur und der dritten vorgegebenen Garzeitdauer Folgendes umfasst:
Umschalten der Garstufe auf die Mikrowellen-Schnellaufheizstufe.

8. Steuerverfahren gemäß Anspruch 1, wobei:
die Garstufe ferner eine Garraum-Temperaturanstiegsstufe umfasst; und
das (S103) Steuern des Heißluftfrittiermoduls (100) oder des Mikrowellenmoduls (200) auf der Grundlage der Garstufe und des Garparameters Folgendes umfasst,
(S501) wenn die Garstufe die Garraum-Temperaturanstiegsstufe ist, Bestimmen einer dritten vorgegebenen Gartemperatur und einer vierten vorgegebenen Garzeitdauer in der Garraum-Temperaturanstiegsstufe;
(S502) Erhalten der Garraumtemperatur der Garvorrichtung(1000); und
(S503) Steuern des Heißluftfrittiermoduls (100) auf der Grundlage der Garraumtemperatur, der dritten vorgegebenen Gartemperatur und der vierten vorgegebenen Garzeitdauer.

9. Steuerverfahren gemäß Anspruch 8, wobei das (S503) Steuern des Heißluftfrittiermoduls (100) auf der Grundlage der Garraumtemperatur, der dritten vorgegebenen Gartemperatur und der vierten vorgegebenen Garzeitdauer in der vierten vorgegebenen Garzeitdauer Folgendes umfasst:
Steuern des Heißluftfrittiermoduls (100) so, dass es in Betrieb ist, wenn die Garraumtemperatur kleiner oder gleich einer Differenz zwischen der dritten vorgegebenen Gartemperatur und einem dritten Temperaturschwellenwert ist; und
Hindern des Heißluftfrittiermoduls (100) am Betrieb, wenn die Garraumtemperatur größer oder gleich einer Summe aus der dritten vorgegebenen Gartemperatur und dem dritten Temperaturschwellenwert ist;
wobei vorzugsweise:
die dritte vorgegebene Gartemperatur im Bereich von 80 °C bis 250 °C liegt; und
die vierte vorgegebene Garzeitdauer zwischen 20 %t und 35 %t liegt, wobei t die Gesamtgarzeitdauer darstellt.

10. Steuerverfahren nach Anspruch 8 oder 9, wobei eine Garzeitdauer in der Heißluftfrittier-Temperaturanstiegsstufe im Bereich von 20 % t bis 30 % t liegt, wobei t die gesamte Garzeitdauer darstellt.

11. Computerlesbares Speichermedium, aufweisend ein darauf gespeichertes Steuerprogramm für eine Garvorrichtung (1000), wobei das Steuerprogramm für die Garvorrichtung (1000), wenn es von einem Prozessor (1002) ausgeführt wird, ein Steuerverfahren für die Garvorrichtung (1000) gemäß einem der Ansprüche 1 bis 10 implementiert.

12. Garvorrichtung (1000), umfassend:
einen Speicher (1001);
einen Prozessor (1002); und
ein Steuerprogramm für eine Garvorrichtung (1000), das im Speicher (1001) gespeichert ist und auf dem Prozessor (1002) ausgeführt werden kann,
wobei der Prozessor (1002) bei der Ausführung des Steuerprogramms ein Steuerverfahren für die Garvorrichtung (1000) gemäß einem der Ansprüche 1 bis 10 implementiert.

13. Steuergerät (300) für eine Garvorrichtung (1000), wobei die Garvorrichtung (1000) ein Heißluftfrittiermodul (100) und ein Mikrowellenmodul (200) umfasst, wobei die Vorrichtung Folgendes umfasst:
ein Erhaltungsmodul (10), das so konfiguriert ist, dass es einen charakteristischen Parameter eines Lebensmittels und eine Garstufe der Garvorrichtung (1000) erhält;
ein Bestimmungsmodul (20), das so konfiguriert ist, dass es einen Garparameter der Garvorrichtung (1000) auf der Grundlage des charakteristischen Parameters des Lebensmittels bestimmt; und
ein Steuermodul (30), das so konfiguriert ist, dass es das Heißluftfrittiermodul (100) oder das Mikrowellenmodul (200) auf der Grundlage der Garstufe und des Garparameters steuert, um das Garen des Lebensmittels zu beschleunigen, **dadurch gekennzeichnet, dass** die Garstufe eine Mikrowellen-Schnellaufheizstufe, eine Heißluftfrittier-Temperaturanstiegsstufe und eine Bräunungs- und Krustenbildungsstufe umfasst, wobei das Mikrowellenmodul (200) gesteuert wird, wenn die Garstufe die Mikrowellen-Schnellaufheizstufe ist, das Heißluftfrittiermodul (100) gesteuert wird, wenn die Garstufe die Heißluftfrittier-Temperaturanstiegsstufe ist, und das Heißluftfrittiermodul (100) gesteuert wird, wenn die Garstufe die Bräunungs- und Krustenbildungsstufe ist, wobei das Steuermodul (30) so konfiguriert ist, dass es (S103) das Heißluftfrittiermodul (100) oder das Mikrowellenmodul (200) auf der Grundlage der Garstufe steuert, und der Garparameter Folgendes umfasst:
(S201) wenn die Garstufe die Mikrowellen-Schnellaufheizstufe ist, Bestimmen einer ersten vorgegebenen Garzeitdauer in der Mikrowellen-Schnellaufheizstufe und Bestimmen einer ersten vorgegebenen Garleistung in der Mikrowellen-Schnellaufheizstufe auf der Grundlage der Art des Lebensmittels; und
(S202) Steuern des Mikrowellenmoduls (200), so dass es während des ersten vorgegebenen Garzeitraums mit der ersten vorgegebenen Garleistung arbeitet.

## Revendications

1. Procédé de commande d'un appareil de cuisson (1000), l'appareil de cuisson (1000) comprenant un module de friture à air chaud (100) et un module à micro-ondes (200), le procédé comprenant :
(S101) l'obtention d'un paramètre caractéristique d'une matière alimentaire et d'une étape de cuisson de l'appareil de cuisson (1000) ;
(S102) la détermination d'un paramètre de cuisson de l'appareil de cuisson (1000) sur la base du paramètre caractéristique de la matière alimentaire ; et
(S103) la commande du module de friture à air chaud (100) ou du module à micro-ondes (200) sur la base de l'étape de cuisson et du paramètre de cuisson afin d'accélérer la cuisson de la matière alimentaire,
dans lequel le paramètre caractéristique de la matière alimentaire comprend un type et un poids de la matière alimentaire ;
le paramètre de cuisson comprend une puissance de cuisson prédéterminée, une température de cuisson prédéterminée, une durée totale de cuisson et une température de la cavité de l'appareil de cuisson (1000) ;
**caractérisé en ce que** l'étape de cuisson comprend une étape de chauffage rapide par micro-ondes, une étape de montée en température par friture à air chaud et une étape de brunissement et de formation de croûte¹, dans lequel le module à micro-ondes (200) est commandé lorsque l'étape de cuisson est l'étape de chauffage rapide par micro-ondes, le module de friture à air chaud (100) est commandé lorsque l'étape de cuisson est l'étape de montée en température par friture à air chaud, et le module de friture à air chaud (100) est commandé lorsque l'étape de cuisson est l'étape de brunissement et de formation de croûte,
dans lequel ladite commande (S103) du module de friture à air chaud (100) ou du module à micro-ondes (200) sur la base de l'étape de cuisson et du paramètre de cuisson comprend :
(S201) lorsque l'étape de cuisson est l'étape de chauffage rapide par micro-ondes, la détermination d'une première durée de cuisson prédéterminée au cours de l'étape de chauffage rapide par micro-ondes, et la détermination d'une première puissance de cuisson prédéterminée au cours de l'étape de chauffage rapide par micro-ondes sur la base du type de la matière alimentaire ; et
(S202) la commande du module à micro-ondes (200) pour qu'il fonctionne à la première puissance de cuisson prédéterminée pendant la première durée de cuisson prédéterminée.

2. Procédé de commande selon la revendication 1, dans lequel ladite commande (S103) du module de friture à air chaud (100) ou du module à micro-ondes (200) sur la base de l'étape de cuisson et du paramètre de cuisson comprend :
(S301) lorsque l'étape de cuisson est l'étape de montée en température par friture à air chaud, la détermination d'une première température de cuisson prédéterminée et d'une deuxième durée de cuisson prédéterminée au cours de l'étape de montée en température par friture à air chaud ;
(S302) l'obtention de la température de la cavité de l'appareil de cuisson (1000) ; et
(S303) la commande du module de friture à air chaud (100) sur la base de la température de la cavité, de la première température de cuisson prédéterminée et de la deuxième durée de cuisson prédéterminée.

3. Procédé de commande selon la revendication 2, dans lequel ladite commande (S303) du module de friture à air chaud (100) sur la base de la température de la cavité, de la première température de cuisson prédéterminée et de la deuxième durée de cuisson prédéterminée comprend, pendant la deuxième durée de cuisson prédéterminée :
la commande du module de friture à air chaud (100) pour le faire fonctionner lorsque la température de la cavité est inférieure ou égale à la différence entre la première température de cuisson prédéterminée et un premier seuil de température ; et
l'interdiction faite au module de friture à air chaud (100) de fonctionner lorsque la température de la cavité est supérieure ou égale à la somme de la première température de cuisson prédéterminée et du premier seuil de température ;
dans lequel, de préférence :
la première température de cuisson prédéterminée est comprise entre 160 °C et 260 °C ; et
la deuxième durée de cuisson prédéterminée est comprise entre 40 %t et 65 %t, où t représente la durée totale de cuisson.

4. Procédé de commande selon la revendication 2 ou 3, comprenant en outre, après l'achèvement de ladite commande (S303) du module de friture à air chaud (100) sur la base de la température de la cavité, de la première température de cuisson prédéterminée et de la deuxième durée de cuisson prédéterminée :
le passage de l'étape de cuisson à l'étape de brunissement et de formation de croûte.

5. Procédé de commande selon la revendication 1, dans lequel ladite commande (S103) du module de friture à air chaud (100) ou du module à micro-ondes (200) sur la base de l'étape de cuisson et du paramètre de cuisson comprend :
(S401) lorsque l'étape de cuisson est l'étape de brunissement et de formation de croûte, la détermination d'une deuxième température de cuisson prédéterminée et d'une troisième durée de cuisson prédéterminée au cours de l'étape de brunissement et de formation de croûte ;
(S402) l'obtention de la température de la cavité de l'appareil de cuisson (1000) ; et
(S403) la commande du module de friture à air chaud (100) sur la base de la température de la cavité, de la deuxième température de cuisson prédéterminée et de la troisième durée de cuisson prédéterminée.

6. Procédé de commande selon la revendication 5, dans lequel ladite commande (S403) du module de friture à air chaud (100) sur la base de la température de la cavité, de la deuxième température de cuisson prédéterminée et de la troisième durée de cuisson prédéterminée comprend, pendant la troisième durée de cuisson prédéterminée :
la commande du module de friture à air chaud (100) pour le faire fonctionner lorsque la température de la cavité est inférieure ou égale à la différence entre la deuxième température de cuisson prédéterminée et un deuxième seuil de température ; et
l'interdiction faite au module de friture à air chaud (100) de fonctionner lorsque la température de la cavité est supérieure ou égale à la somme de la deuxième température de cuisson prédéterminée et du deuxième seuil de température ;
dans lequel, de préférence :
la deuxième température de cuisson prédéterminée est comprise entre 140 °C et 250 °C ; et
la troisième durée de cuisson prédéterminée est comprise entre 15 %t et 40 %t, où t représente la durée totale de cuisson.

7. Procédé de commande selon la revendication 5 ou 6, comprenant en outre, après l'achèvement de ladite commande (S403) du module de friture à air chaud (100) sur la base de la température de la cavité, de la deuxième température de cuisson prédéterminée et de la troisième durée de cuisson prédéterminée : le passage de l'étape de cuisson à l'étape de chauffage rapide par micro-ondes.

8. Procédé de commande selon la revendication 1, dans lequel :
l'étape de cuisson comprend en outre une étape de montée en température de la cavité ; et
ladite commande (S103) du module de friture à air chaud (100) ou du module à micro-ondes (200) sur la base de l'étape de cuisson et du paramètre de cuisson comprend :
(S501) lorsque l'étape de cuisson est l'étape de montée en température de la cavité, la détermination d'une troisième température de cuisson prédéterminée et d'une quatrième durée de cuisson prédéterminée au cours de l'étape de montée en température de la cavité ;
(S502) l'obtention de la température de la cavité de l'appareil de cuisson (1000) ; et
(S503) la commande du module de friture à air chaud (100) sur la base de la température de la cavité, de la troisième température de cuisson prédéterminée et de la quatrième durée de cuisson prédéterminée.

9. Procédé de commande selon la revendication 8, dans lequel ladite commande (S503) du module de friture à air chaud (100) sur la base de la température de la cavité, de la troisième température de cuisson prédéterminée et de la quatrième durée de cuisson prédéterminée comprend, pendant la quatrième durée de cuisson prédéterminée :
la commande du module de friture à air chaud (100) pour le faire fonctionner lorsque la température de la cavité est inférieure ou égale à la différence entre la troisième température de cuisson prédéterminée et un troisième seuil de température ; et
l'interdiction faite au module de friture à air chaud (100) de fonctionner lorsque la température de la cavité est supérieure ou égale à la somme de la troisième température de cuisson prédéterminée et du troisième seuil de température ;
dans lequel, de préférence :
la troisième température de cuisson prédéterminée est comprise entre 80 °C et 250 °C ; et
la quatrième durée de cuisson prédéterminée est comprise entre 20 %t et 35 %t, où t représente la durée totale de cuisson.

10. Procédé de commande selon la revendication 8 ou 9, dans lequel une durée de cuisson au cours de l'étape de montée en température par friture à air chaud est comprise entre 20 %t et 30 %t, où t représente la durée totale de cuisson.

11. Support de stockage lisible par ordinateur, sur lequel est stocké un programme de commande pour un appareil de cuisson (1000), dans lequel le programme de commande pour l'appareil de cuisson (1000), lorsqu'il est exécuté par un processeur (1002), met en œuvre un procédé de commande de l'appareil de cuisson (1000) selon l'une quelconque des revendications 1 à 10.

12. Appareil de cuisson (1000), comprenant :
une mémoire (1001) ;
un processeur (1002) ; et
un programme de commande pour un appareil de cuisson (1000), stocké dans la mémoire (1001) et exécutable par le processeur (1002),
dans lequel le processeur (1002), lorsqu'il exécute le programme de commande, met en œuvre un procédé de commande de l'appareil de cuisson (1000) selon l'une quelconque des revendications 1 à 10.

13. Dispositif de commande (300) pour un appareil de cuisson (1000), l'appareil de cuisson (1000) comprenant un module de friture à air chaud (100) et un module à micro-ondes (200), le dispositif comprenant :
un module d'obtention (10) configuré pour obtenir un paramètre caractéristique d'une matière alimentaire et une étape de cuisson de l'appareil de cuisson (1000) ;
un module de détermination (20) configuré pour déterminer un paramètre de cuisson de l'appareil de cuisson (1000) sur la base du paramètre caractéristique de la matière alimentaire ; et
un module de commande (30) configuré pour commander le module de friture à air chaud (100) ou le module à micro-ondes (200) sur la base de l'étape de cuisson et du paramètre de cuisson afin d'accélérer la cuisson de la matière alimentaire,
**caractérisé en ce que** l'étape de cuisson comprend une étape de chauffage rapide par micro-ondes, une étape de montée en température par friture à air chaud et une étape de brunissement et de formation de croûte, dans lequel le module à micro-ondes (200) est commandé lorsque l'étape de cuisson est l'étape de chauffage rapide par micro-ondes, le module de friture à air chaud (100) est commandé lorsque l'étape de cuisson est l'étape de montée en température par friture à air chaud, et le module de friture à air chaud (100) est commandé lorsque l'étape de cuisson est l'étape de brunissement et de formation de croûte,
dans lequel ledit module de commande (30) est configuré pour effectuer la commande (S103) du module de friture à air chaud (100) ou du module à micro-ondes (200) sur la base de l'étape de cuisson et du paramètre de cuisson, ladite commande comprenant :
(S201) lorsque l'étape de cuisson est l'étape de chauffage rapide par micro-ondes, la détermination d'une première durée de cuisson prédéterminée au cours de l'étape de chauffage rapide par micro-ondes, et la détermination d'une première puissance de cuisson prédéterminée au cours de l'étape de chauffage rapide par micro-ondes sur la base du type de la matière alimentaire ; et
(S202) la commande du module à micro-ondes (200) pour qu'il fonctionne à la première puissance de cuisson prédéterminée pendant la première durée de cuisson prédéterminée.
